# EUROPÄISCHE PATENTSCHRIFT

(11) **EP 2 490 856 B1**
(45) Veröffentlichungstag und Bekanntmachung des Hinweises auf die Patenterteilung: **07.08.2013**
(21) Anmeldenummer: 10770732.5
(22) Anmeldetag: 21.10.2010
(51) Int. Cl.: B23P 19/06, B21J 15/02, B21J 15/08, F16B 5/04, B21J 15/28

(54) **PROZESSÜBERWACHUNG ZUM HOCHGESCHWINDIGKEITSFÜGEN**
PROCESS MONITORING FOR HIGH-SPEED JOINING
CONTRÔLE D'UN PROCESSUS D'ASSEMBLAGE À GRANDE VITESSE

(30) Priorität: 21.10.2009 DE 102009050200
(43) Veröffentlichungstag der Anmeldung: 29.08.2012
(73) Patentinhaber: Böllhoff Verbindungstechnik GmbH, 33649 Bielefeld (DE)
(72) Erfinder: DRAHT, Torsten, 33758 Schloß Holte (DE); KOLAC, Adnan, 33647 Bielefeld (DE)
(74) Vertreter: Heyer, Volker
(86) Internationale Anmeldenummer: PCT/EP2010/006444
(87) Internationale Veröffentlichungsnummer: WO 2011/047862

(56) Entgegenhaltungen:
- DE-A1- 19 752 367
- DE-A1-102006 002 237
- JP-A- 2009 183 975
- US-A- 5 383 370
- US-A1- 2009 000 801

## Beschreibung

### 1. Gebiet der Erfindung

Die vorliegende Erfindung betrifft ein Prozessüberwachungsverfahren eines Fügevorgangs eines Fügeelements mit einer Geschwindigkeit von mindestens 5 m/s, insbesondere ein Setzen eines Bolzens mit mindestens 10 m/s. Des Weiteren umfasst vorliegende Erfindung ein Verfahren zur Prüfung einer Fügeverbindung, ohne dabei die Fügeverbindung zu zerstören.

### 2. Hintergrund der Erfindung

Im Stand der Technik sind verschiedenste Verfahren zum Herstellen einer Fügeverbindung bekannt. Um diese Verfahren verlässlich anwenden zu können, ist es erforderlich, dass parallel zu diesen Fügeverfahren Prozessüberwachungsverfahren ablaufen. Eine derartige Prozessüberwachung wertet die Größen des Fügeverfahrens aus und signalisiert, ob eine hergestellte Fügeverbindung in Ordnung ist (i.O.) oder nicht.

Bei bekannten Fügeverfahren werden häufig die Kraft-Weg-Kurven während des Fügevorgangs ermittelt. Diese Kraft-Weg-Kurven geben die durch den Stempel auf das Fügeelement aufgebrachte Kraft in Abhängigkeit von dem durch den Stempel zurückgelegten Weg wieder. Es hat sich gezeigt, dass dieser Ansatz nicht universell auf jedes beliebige Fügeverfahren anwendbar ist.

Es ist daher die Aufgabe vorliegender Erfindung, ein Prozessüberwachungsverfahren eines Fügevorgangs eines Fügeelements mit einer Geschwindigkeit von mindestens 5 m/s bereitzustellen.

### 3. Zusammenfassung der Erfindung

Die oben genannte Aufgabe wird durch ein Prozessüberwachungsverfahren gemäß dem unabhängigen Patentanspruch 1 gelöst. Zudem offenbart vorliegende Erfindung ein Verfahren zur zerstörungsfreien Prüfung einer Fügeverbindung gemäß Patentanspruch 13. Vorteilhafte Ausgestaltungen und Weiterentwicklungen vorliegender Erfindung gehen aus der Beschreibung, den Zeichnungen und den anhängenden Patentansprüchen hervor.

Das erfindungsgemäße Prozessüberwachungsverfahren dient der Überwachung eines Fügevorgangs eines Fügeelements mit einer Geschwindigkeit von mindestens 5 m/s, insbesondere ein Setzen eines Bolzens mit mindestens 10 m/s, in mindestens ein Bauteil mit Hilfe eines Setzgeräts. Das Setzgerät weist die folgenden Merkmale auf: einen Stempel zum Setzen des Fügeelements, einen Puffer, der eine maximale Auslenkung des Stempels in Fügerichtung begrenzt, und eine Wegmessung, mit der die Auslenkung des Stempels erfassbar ist. Auf dieser Grundlage umfasst das Prozessüberwachungsverfahren die folgenden Schritte: Erfassen des Wegs des Stempels während des Fügevorgangs in Abhängigkeit von der Zeit in Form einer Weg-Zeit-Kurve, Erfassen eines Aufsetzen des Stempels auf dem Puffer, Auswerten der Weg-Zeit-Kurve derart, dass bei Vorhandensein mindestens eines Maximums gefolgt von mindestens einem Minimum in der Weg-Zeit-Kurve und ohne Aufsetzen des Stempels auf dem Puffer eine gefügte Verbindung als i.O. (in Ordnung) qualifiziert wird.

Mit Hilfe des erfindungsgemäßen Verfahrens wird im Gegensatz zu bisherigen Prozessüberwachungen der Stempelweg in Abhängigkeit von der Zeit als Referenzgröße für die Qualität der Erfindung herangezogen. Dies trifft gerade für das Hochgeschwindigkeitsfügen zu, bei dem die Fügeelemente mit einer Geschwindigkeit von mindestens 5 m/s gefügt werden. Während des Fügevorgangs treibt der Stempel nicht nur das Fügeelement in das mindestens eine Bauteil ein, sondern der Stempel erfährt ebenfalls eine Bauteilreaktion auf das Eintreiben des Fügeelements in das mindestens eine Bauteil. Diese Bauteilreaktion führt dazu, dass der Stempel entgegen der Fügerichtung bewegt wird. Daher umfasst ein Fügevorgang den Zeitraum, über den das Setzgerät an einer Fügestelle betrieben wird und Reaktionskräfte der Fügestelle erfährt. Wird die Weg-Zeit-Kurve des Stempels erfasst, ist aus ihr die Bauteilreaktion während des Fügevorgangs und daher auch die Qualität der hergestellten Erfindung lesbar. Diese Auswertung schließt ein, dass man das mindestens eine Minimum und das mindestens eine Maximum in der Weg-Zeit-Kurve ermittelt, um daraus die entsprechenden Rückschlüsse auf die Qualität der hergestellten Fügeverbindung zu ziehen. Diese Information wird dadurch ergänzt, ob der Stempel während des Fügevorgangs auf dem Puffer aufsetzt oder nicht. Sollte ein derartiges Aufsetzen des Stempels auf dem Puffer stattfinden, ist dies ein Hinweis darauf, dass das Fügeelement mit einer gewissen Überschussenergie gefügt worden ist. Diese Überschussenergie führt dazu, dass die hergestellte Fügeverbindung bereits geschwächt und als nicht in Ordnung qualifiziert werden muss.

Das Aufsetzen des Stempels auf dem Puffer des Setzgeräts wird gemäß unterschiedlicher bevorzugter Konstruktionen erfasst und ein entsprechendes Signal ermittelt. Gemäß einer Ausführungsform umfasst der Puffer einen durch den Stempel auslösbaren elektrischen Schalter. Das Prozessüberwachungsverfahren wird demnach um den Schritt ergänzt: Auslösen eines elektrischen Signals durch den Puffer, wenn der Stempel auf den Puffer auftrifft. Gemäß einer weiteren Ausführungsform umfasst der Puffer einen Kraftsensor, der die Aufsetzkraft des Stempels beim Aufsetzen auf den Puffer erfasst. Bei dieser konstruktiven Ausgestaltung wird das Prozessüberwachungsverfahren um folgenden Schritt erweitert: Ausgeben einer Aufsetzkraft durch den Puffer, wenn der Stempel auf den Puffer aufsetzt. Es ist ebenfalls bevorzugt, ein Aufsetzen des Stempels auf dem Puffer unterhalb einer Mindest-Aufsetzkraft nicht als Aufsetzen des Stempels auf dem Puffer zu definieren.

Zur Auswertung der Weg-Zeit-Kurve ist es weiterhin bevorzugt, die erste und zweite Ableitung der Weg-Zeit-Kurve nach der Zeit zu bilden, um das mindestens eine Maximum und das mindestens eine Minimum zu bestimmen.

Es ist weiterhin bevorzugt, dem Prozessüberwachungsverfahren während des Fügevorgangs die Bestimmung eines Prozessfensters für den Fügevorgang voranzustellen. In diesem Zusammenhang erfolgt das empirische Ermitteln einer dem Fügeelement zuzuführenden Fügeenergie und eines durch das Fügeelement zurückzulegenden Wegs, um eine i.O.-Verbindung zu erzielen. Dabei soll der Stempel nicht auf dem Puffer auftreffen. Bei der Ermittlung der Fügeenergie wird eine Mehrzahl von Fügeverbindungen hergestellt, bei denen die Fügeenergie bewusst variiert wird. Um die passende Fügeenergie für die herzustellende Fügeverbindung zu ermitteln, werden nachfolgend die hergestellten Fügeverbindungen qualifiziert. Im Rahmen der Qualifikation der Fügeverbindung, ob diese in Ordnung (i. O.) oder nicht in Ordnung (n. i. O.) sind, wird bevorzugt eine optische Prüfung der hergestellten Fügeverbindung durchgeführt. Diese optische Prüfung umfasst gemäß einer Alternative die Prüfung des Kopfüberstands des gefügten Fügeelements.

Gemäß einer anderen Alternative wird eine Drehmomentprüfung an dem gefügten Fügeelement durchgeführt. Diese Drehmomentprüfung umfasst vorzugsweise ein Drehen des gefügten Fügeelements mit einem definierten Drehmoment, so dass bei fehlendem Mitdrehen des Fügeelements die Verbindung als i.O. qualifiziert wird. Die Drehmomentprüfung ist daher eine zerstörungsfreie Prüfung einer hergestellten Fügeverbindung.

In gleicher Weise ist es bevorzugt, eine Qualität einer hergestellten Fügeverbindung anhand der Kopfzugfestigkeit des Fügeelements beim Entfernen des Fügeelements aus dem mindestens einen Bauteil zu bestimmen. Auf Grundlage der ermittelten Qualität der hergestellten Fügeverbindungen ist somit die für eine Herstellung einer Fügeverbindung geeignete Fügeenergie bestimmbar. Bei hydraulisch und pneumatisch betriebenen Setzgeräten erfolgt ein Ermitteln des Druckbereichs beim pneumatischen oder hydraulischen Fügen als Referenz der dem Fügelement zugeführten Fügeenergie. Es ist ebenfalls bevorzugt, die Fügeverbindung mit Hilfe eines elektromechanisch arbeitenden Setzgeräts herzustellen. In diesem Fall wird ein Geschwindigkeitsbereich des Stempels beim elektromechanischen Fügen eines Fügeelements ermittelt, der als Referenz der dem Fügeelement zugeführten Fügeenergie dient.

Als Bestandteil des oben zusammengefassten Prozessüberwachungsverfahrens offenbart vorliegende Erfindung ebenfalls das Verfahren zur zerstörungsfreien Prüfung einer Fügeverbindung, insbesondere einer Verbindung aus einem Bolzen und mindestens einem Bauteil. Dieses Prüfungsverfahren weist die folgenden Schritte auf: Drehen des Fügeelements der Fügeverbindung mit einem definierten Drehmoment und Auswerten des Drehens derart, dass bei fehlendem Mitdrehen des Fügeelements bei Aufbringen des definierten Drehmoments die Fügeverbindung als i.O. qualifiziert wird.

### 4. Kurze Beschreibung der begleitenden Zeichnungen

Die vorliegende Erfindung wird unter Bezugnahme auf die begleitenden Zeichnungen näher erläutert. Es zeigen:
- Fig. 1: eine schematische Darstellung eines bevorzugten Setzgeräts,
- Fig. 2: eine schematische Darstellung eines bevorzugten Ausschnitts eines Setzgeräts,
- Fig. 3: eine weitere schematische Darstellung eines bevorzugten Setzgeräts,
- Fig. 4a - 4c: bevorzugte schematische Diagramme zur Beschreibung des bevorzugten Prozessüberwachungsverfahrens,
- Fig. 5a - 5d: schematische Diagramme zur Beschreibung des bevorzugten Prozessüberwachungsverfahrens und
- Fig. 6: ein Flussdiagramm einer bevorzugten Ausführungsform des Prozessüberwachungsfahrens.

### 5. Detaillierte Beschreibung bevorzugter Ausführungsformen

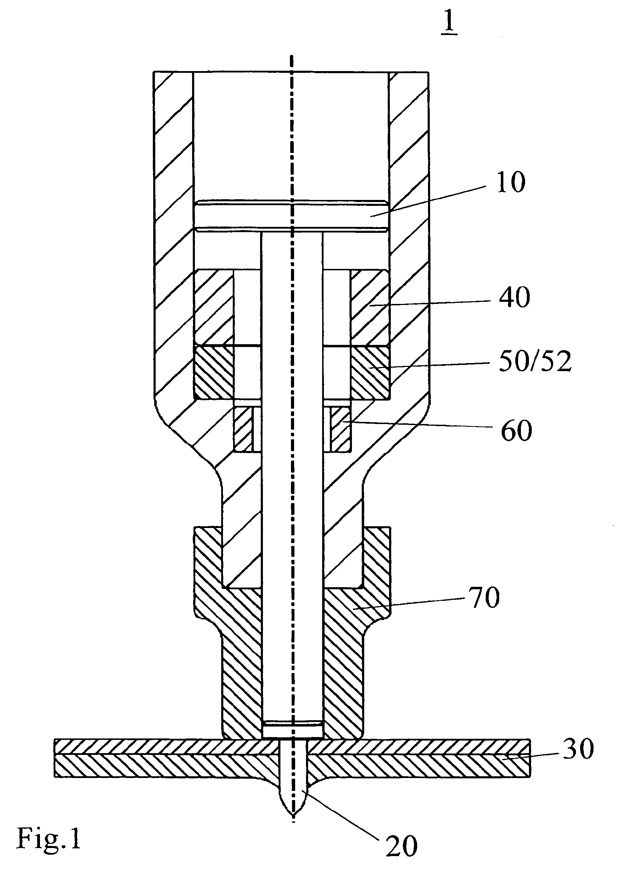

Figur 1 zeigt eine schematische Darstellung eines bevorzugten Setzgeräts 1 zum Hochgeschwindigkeitsfügen eines Fügeelements 20. Das Fügeelement 20 wird mit einer Geschwindigkeit von mindestens 5 m/s, vorzugsweise mindestens 10 m/s, in mindestens ein Bauteil 30 gefügt. Ein Beispiel für das Fügeelement 20 ist ein Bolzen, wie er in DE 10 2006 002 238, DE 20 2006 00 666, DE 10 2007 017 590 und DE 10 2007 003 126 beschrieben ist. Des Weiteren ist die hier beschriebene Prozessüberwachung für das Hochgeschwindigkeitsfügen von Stanznieten sowie das Hochgeschwindigkeitsfügen durch Clinchen in gleicher Weise anwendbar.

Das Setzgerät 1 umfasst ein Gehäuse, in dem ein Stempel 10 linear bewegbar angeordnet ist. Die Bewegung des Stempels 10 erfolgt in Fügerichtung, d.h. in Richtung der Bauteile 30, sowie entgegen der Fügerichtung. Der Stempel 10 wird vorzugsweise pneumatisch mit einem pneumatisch arbeitenden Kolben-Zylinder-Antrieb betätigt. Es ist ebenfalls bevorzugt, den Stempel 10 hydraulisch über eine hydraulische Kolben-Zylinder-Anordnung anzutreiben. Eine weitere Ausführungsform vorliegender Erfindung nutzt einen elektromotorischen Antrieb des Stempels 10. Ein derartiger elektromotorischer Antrieb besteht beispielsweise aus einem elektrisch angetriebenen Spindeltrieb oder aus einem ähnlich arbeitenden Linearantrieb.

Um eine Beschädigung des Stempels 10 während des Fügevorgangs zu vermeiden, ist ein Puffer 40 in Fügerichtung unterhalb des Stempels vorgesehen. Der Puffer 40 dämpft die Bewegung des Stempels 10 in Fügerichtung, falls der Stempel 10 auf den Puffer 40 auftreffen sollte. Der Puffer 40 ist gemäß einer Ausführungsform vorliegender Erfindung mit einem elektrischen Schalter 50 verbunden. Sobald der Stempel 10 auf dem Puffer 40 auftrifft, wird der Schalter 50 ausgelöst und ein entsprechendes elektrisches Signal erzeugt. Das elektrische Signal wird an eine Steuereinheit, beispielsweise einen Computer, übermittelt, um bei der Prozessüberwachung verwendet zu werden.

Es ist ebenfalls bevorzugt, in Kombination mit dem Puffer 40 einen Kraftsensor 52 vorzusehen. Bei Aufsetzen des Stempels 10 auf dem Puffer 40 erfasst der Kraftsensor 52 die Kraft, mit der der Stempel 10 den Puffer 40 zusammendrückt. Die vom Kraftsensor 52 erfasste Aufsetzkraft des Stempels 10 auf dem Puffer 40 wird ebenfalls an die Steuereinheit weitergeleitet. Gemäß einer Alternative vorliegender Erfindung wird lediglich die Information weitergeleitet, dass ein Aufsetzen des Stempels 10 auf dem Puffer 40 stattgefunden hat. Gemäß einer weiterhin bevorzugten Alternative wird die absolute Aufsetzkraft des Stempels 10 auf dem Puffer oder ein dafür repräsentatives elektrisches Signal an die Steuereinheit weitergeleitet.

Das Setzgerät 1 umfasst ebenfalls einen Wegsensor 60. Der Wegsensor 60 erfasst den Weg des Stempels 10 in Fügerichtung sowie entgegen der Fügerichtung. Der erfasste Weg des Stempels 10 wird vorzugsweise in Form elektrischer Signale an die Steuereinheit weitergeleitet und dort verarbeitet. In der Steuereinheit wird das Wegsignal in Abhängigkeit von der für den Weg erforderlichen Zeit erfasst, so dass eine Weg-Zeit-Kurve des Stempels 10 aus diesen Daten generierbar ist.

Der Stempel 10 bewegt sich vorzugsweise in einem hohlzylindrischen Fügekanal 70. Gemäß einer Ausführungsform dient der Fügekanal 70 als Niederhalter. Er wird auf das mindestens eine Bauteil 30 aufgesetzt, um es an der Fügestelle mechanisch vorzuspannen.

Weiterhin ist der Fügekanal 70 bevorzugt in seiner Länge einstellbar. Durch die Längeneinstellung des Fügekanals 70 wird gezielt der mögliche Stempelweg eingestellt, so dass die Fügeverbindung gerade hergestellt ist, der Stempel 10 aber noch nicht auf dem Puffer 40 aufgesetzt hat. Während des Fügens findet in Abhängigkeit von der Konstruktion und dem Material des mindestens einen Bauteils 30 eine unterschiedlich starke Verformung des Bauteils 30 statt, bis die Fügeverbindung hergestellt ist. Das mindestens eine Bauteil 30 wird beispielsweise unterschiedlich stark in Fügerichtung elastisch verformt bzw. es weicht dem Bolzen 20 aus. Diese Verformung des mindestens einen Bauteils 30 muss bei der Einstellung des möglichen Stempelwegs berücksichtigt werden. D.h. der Stempel 10 muss einen längeren Weg zum Fügen zurücklegen dürfen, bevor er auf den Puffer 40 trifft. Andernfalls genügt der zurückgelegte Stempelweg lediglich dem Verformen des mindestens einen Bauteils 30 und einem unvollständigen Eintreiben des Bolzens 20 in das mindestens eine Bauteil 30. Daher wird die Länge des Fügekanals 70 derart eingestellt, dass mit dem möglichen Stempelweg das Bauteil 30 verformbar und der Bolzen 20 vollständig eintreibbar ist. Dabei setzt der Stempel 10 nicht auf dem Puffer 40 auf und der mögliche Stempelweg endet kurz vor dem Puffer 40. Nur wenn der Stempel 10 eine nicht gewollte Überschuss-Fügeeinergie haben sollte, trifft bei einem derart in seiner Länge eingestellten Fügekanal 70 der Stempel 10 auf den Puffer 40 auf.

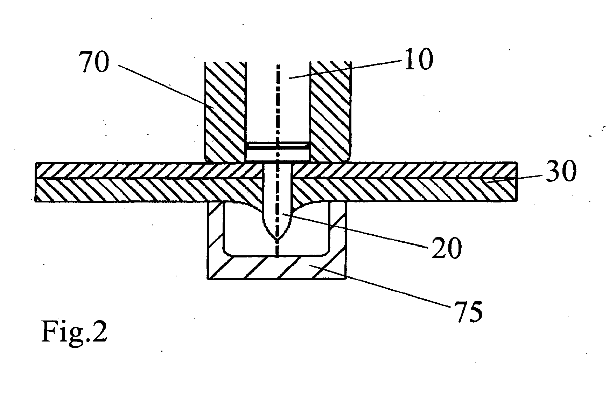

Figur 2 zeigt eine schematische Darstellung einer bevorzugten Ausführungsform des Setzgeräts 1 für das Fügen in biegeweiche Bauteile 30 oder Fügeteilanordnungen. Biegeweiche Fügeteilanordnungen sind aufgrund ihrer Konstruktion und/oder Materialwahl durch den Fügevorgang leicht verformbar, so dass sie als biegeweich bezeichnet werden. In diesem Zusammenhang sind Bleche geringer Stärke ein entsprechendes Beispiel. Derartigen Bleche werden während des Eindringens des Fügeteils auch außerhalb der Fügestelle verzogen und deformiert, was vermieden werden soll. Daher werden in der Anordnung der Fig. 2 die Bauteile 30 bevorzugt zweiseitig abgestützt, sofern sie auch von zwei Seiten zugänglich sind. Zu diesem Zweck ist ein Gegenlager 75 vorgesehen, während die übrige Anordnung dem Setzgerät 1 gemäß Figur 1 entspricht.

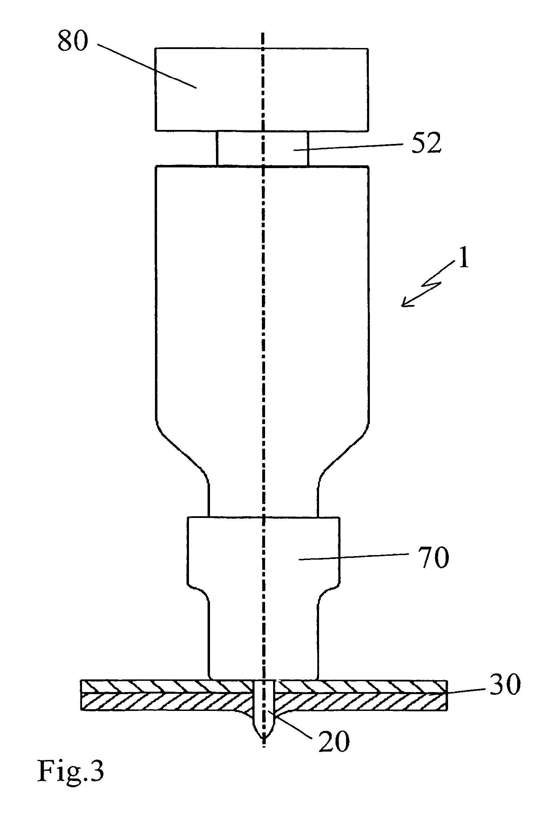

Figur 3 illustriert eine bevorzugte Ausführungsform des Setzgeräts 1, das an einem Roboter 80 befestigt ist. In dieser Anordnung ist es im Vergleich zum Setzgerät 1 der Figur 1 bevorzugt, den Kraftsensor 52 entweder unter dem Puffer 40 (nicht gezeigt) oder zwischen Roboter 80 und Setzgerät 1 anzuordnen. Gemäß Figur 3 ist der Kraftsensor 52 zwischen Roboter 80 und Setzgerät 1 angeordnet. Trifft der Stempel 10 auf den Puffer 40, wird ein ähnliches Kraftsignal im Sensor 52 erzeugt, als würde der Kraftsensor 52 unter dem Puffer 40 angeordnet sein. Auf Grund der anderen Position des Kraftsensors 52 ist das Vorzeichen der Kraftsignale für die Anordnungen der Figuren 1 und 3 unterschiedlich. Dies liegt daran, dass der Kraftsensor 52 zwischen Roboter 80 und Setzgerät 1 auf Zug belastet wird, wenn der Stempel 10 auf den Puffer 40 trifft. Im Gegensatz dazu wird in Figur 1 der Kraftsensor 52 auf Druck belastet, wenn der Stempel 10 auf den Puffer 40 trifft.

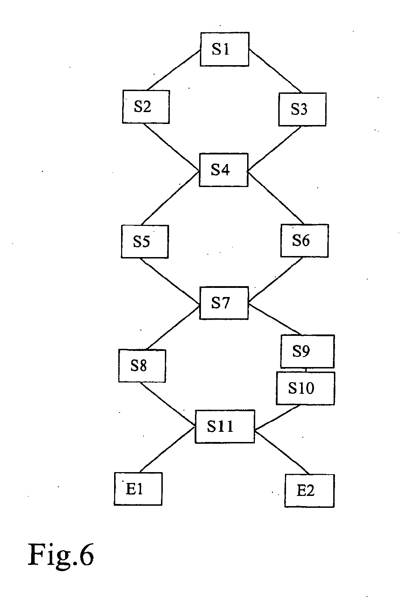

Figur 6 zeigt ein Flussdiagramm eines bevorzugten Prozessüberwachungsverfahrens beim Hochgeschwindigkeitsfügen. Das Prozessüberwachungsverfahren wird am Beispiel eines bevorzugten Setzgeräts 1 erläutert, das den Bolzen 20 mittels Druckluft in das mindestens eine Bauteil 30 fügt.

Bevor das automatische Fügen in einer Montagestrecke erfolgen kann, wird bevorzugt ein Prozessfenster für die herzustellenden Verbindungen ermittelt. Zu diesem Zweck stellt man im Schritt S 1 eine Mehrzahl von Testverbindungen her. Beim Herstellen der Testverbindungen in exemplarischen später zu fügenden Bauteilen 30 wird gezielt die Fügeenergie des Bolzens 20 verändert. Einerseits ist dies durch Verändern des pneumatischen Drucks im pneumatischen Kolben-Zylinder-Antrieb des Setzgeräts 1 realisierbar (vgl. Schritt S3). Sollte man einen elektromotorischen Antrieb des Stempels 10 nutzen, wird bevorzugt die Geschwindigkeit des Stempels 10 zum Fügen variiert. Andererseits wird der Bolzen 20 mit unterschiedlichen Längen des Fügekanals 70 bei gleichem pneumatischem Druck gefügt (siehe oben, vgl. Schritt S2). Es ist ebenfalls bevorzugt, die beiden Schritte S2 und S3 in Kombination einzusetzen. Wird der Bolzen 20 ohne Aufsetzen des Fügekanals 70 auf dem Bauteil 30 gefügt, wird der Abstand des Setzgeräts 1 zum Bauteil 30 in Analogie zur Einstellung der Länge des Fügekanals 70 verändert.

Beim empirischen Ermitteln der Fügeparameter pneumatischer Druck und Länge des Fügekanals 70 ist es ebenfalls bevorzugt, die Fügeparameter auszuschließen, bei denen der Stempel 10 den Puffer 40 berührt oder mit zu hoher Aufsetzkraft aufsetzt (siehe unten).

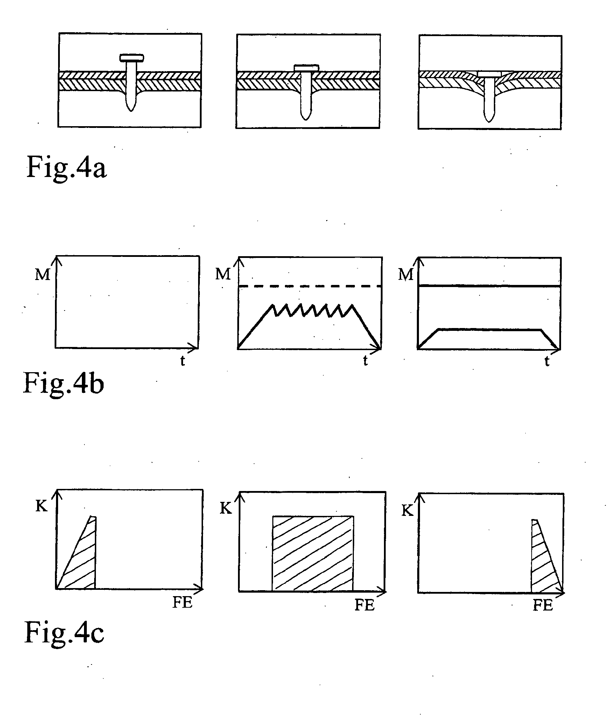

Gemäß Schritt S4 werden die hergestellten Testverbindungen optisch überprüft (vgl. Schritt S4). In Abhängigkeit vom Ergebnis dieser Prüfung werden die Verbindungen als i.O. (in Ordnung) oder n.i.O. (nicht in Ordnung) qualifiziert. Die Qualifikation erfolgt mit Hilfe einer Kopfüberstandsmessung. Im Rahmen der Kopfüberstandsmessung wird gemessen, wie weit der Kopf des Bolzens 20 über das Bauteil 30 übersteht. Dies ist schematisch in Figur 4a dargestellt. In der linken Darstellung aus Figur 4a liegt der Bolzenkopf nicht auf dem Bauteil 30 auf. Daher ist die Verbindung n.i.O. In der mittleren Darstellung der Figur 4a liegt der Bolzenkopf auf dem Bauteil 30 auf. Die Bauteiloberfläche ist nicht oder nur vernachlässigbar gering in Fügerichtung verformt. Daher wird die in der mittleren Darstellung der Figur 4a gezeigte Verbindung als i.O. qualifiziert. In der rechten Darstellung der Figur 4a liegt der Bolzenkopf auf dem Bauteil 30 auf. Gleichzeitig ist die Bauteiloberfläche deutlich in Fügerichtung verformt. Daher wird diese Verbindung als n.i.O. qualifiziert.

Die zerstörungsfreie optische Messung des Kopfüberstands gemäß Schritt S4 wird optional durch eine Messung der Kopfzugfestigkeit des Bolzens 20 der Testverbindung ergänzt (Schritt S5). Das Ergebnis dieser Kopfzugfestigkeitsprüfung ist schematisch in Figur 4c dargestellt. In den Darstellungen der Figur 4c ist die Kopfzugfestigkeit K über der Fügekraft oder Fügeenergie FE der hergestellten Verbindung aufgetragen. Das linke Diagramm der Figur 4c repräsentiert die Kopfzugfestigkeit von Verbindungen mit Kopfüberstand gemäß der linken Darstellung in Figur 4a. Da der Bolzen 20 nicht vollständig in die Bauteile 30 eingedrungen ist, ist die Kopfzugfestigkeit für eine verlässliche Verbindung nicht ausreichend. Mit zunehmender Fügeenergie steigt die Kopfzugfestigkeit an. Verbindungen dieser Fügeenergie werden als n.i.O. qualifiziert.

Das mittlere Diagramm der Figur 4c zeigt die Kopfzugfestigkeiten von Verbindungen mit optimal gefügten Bolzen 20 gemäß der mittleren Darstellung der Figur 4a. Es ist erkennbar, dass über einen bestimmten Bereich der Fügeenergie FE die Kopfzugfestigkeit des gefügten Bolzens 20 konstant ist. Diese Verbindungen werden als i.O. qualifiziert.

Das rechte Diagramm der Figur 4c zeigt die Kopfzugfestigkeit von Verbindungen mit zu tief gesetztem Bolzen 20. Dies ist schematisch in der rechten Darstellung in Figur 4a veranschaulicht. Bei diesen Verbindungen, bei denen der Bolzen 20 die Bauteile 30 stärker verformt als in der mittleren Darstellung von Figur 4c, nimmt die Kopfzugfestigkeit mit zunehmender Fügeenergie FE weiter ab. Derartige Verbindungen werden als n.i.O. qualifiziert.

Es ist ebenfalls bevorzugt, ergänzend oder an Stelle der Kopfzugfestigkeitsprüfung eine Drehmomentprüfung der Testverbindungen gemäß Schritt S6 durchzuführen. Zu diesem Zweck wird der gesetzte Bolzen 20 mit einem definierten Drehmoment M gedreht. Sollte sich der Bolzen 20 bei diesem definierten Drehmoment M nicht mitdrehen, wird die Verbindung als in Ordnung (i.O.) qualifiziert. Sollte sich der Bolzen 20 mitdrehen, wird die Verbindung als nicht in Ordnung (n.i.O.) qualifiziert. Schematisch ist diese Drehmomentprüfung in Figur 4b dargestellt. Auf der Y-Achse der gezeigten Diagramme ist das Drehmoment M aufgetragen. Auf der X-Achse der gezeigten Diagramme ist die Zeit für die Drehmomentprüfung aufgetragen. Die linke Darstellung in Figur 4b betrifft eine Verbindung mit Kopfüberstand gemäß der linken Darstellung der Figur 4a. Hier erfolgt keine Drehmomentprüfung, da bereits nach optischer Prüfung die Verbindung als n.i.O. qualifiziert wird.

Die mittlere Darstellung der Figur 4b veranschaulicht das Drehen des Bolzens 20 in der Testverbindung, welches vorzugsweise mit Hilfe eines Drehmomentschlüssels durchgeführt wird. Wird der Drehmomentschlüssel mit voreingestelltem definiertem Drehmoment M am Bolzen 20 angesetzt, gibt beim Drehen jeweils ein Drehmomentbegrenzer den Schlüssel in Drehrichtung frei. Der Drehmomentbegrenzer gibt den Schlüssel bei einem Grenzdrehmoment frei, das größer als das definierte Drehmoment M ist. Damit ist gewährleistet, dass die hergestellte Verbindung dem definierten Drehmoment M standhält. Das Freigeben des Drehmomentbegrenzers ist durch die gezackte Kurve im mittleren Diagramm der Figur 4b veranschaulicht.

Dies bedeutet qualitativ, dass sich der Bolzen 20 nicht durch das definierte Drehmoment M mitdrehen lässt. Stattdessen hält die Verbindung dem definierten Drehmoment M stand, so dass der Drehmomentschlüssel automatisch in kurzen Abständen freigegeben wird. Dies entspricht einer bekannten Ratsche bei Drehmomentschlüsseln. Da der Drehmomentschlüssel den Bolzen 20 mit dem vorgegebenen Drehmoment M nicht mitzudrehen vermag, wird die Verbindung als i.O. qualifiziert. Es erfolgt daher mit Hilfe der Drehmomentprüfung eine zerstörungsfreie Prüfung der vorliegenden Verbindung. Diese zerstörungsfreie Drehmomentprüfung wird bevorzugt auch getrennt von der Prozessüberwachung zur Qualifikation von Verbindungen eingesetzt. Sie ist bevorzugt auch automatisch mit einer Vorrichtung realisierbar, die ein definiertes Drehmoment auf ein Fügeelement aufbringen kann.

In der rechten Darstellung in Figur 4b ist dargestellt, dass der Bolzen 20 durch maximal das definierte Drehmoment M mitgedreht wird. Dies erkennt man an der waagerechten Kurve in der rechten Darstellung von Figur 4b. Diese annähernd waagerechte Kurve ist in ihrem Niveau unterhalb der gezackten Kurve aus der mittleren Darstellung in Fig. 4b angeordnet, weil das mitdrehende Drehmoment geringer ist als das Grenzdrehmoment des Drehmomentbegrenzers. Somit ist die Verbindung als n.i.O. zu qualifizieren.

Anhand der empirischen Vorversuche mit den Schritten S1 bis S6 oder einer Auswahl der Schritte S1 bis S6 werden die aufzubringende Fügeenergie sowie die Länge des Fügekanals 70 oder Abstand zwischen Setzgerät 1 und Bauteil 30 ermittelt. Mit dieser Fügeenergie FE und der Länge des Fügekanals 70 ist die erzeugte Verbindung i.O., ohne dass der Stempel 10 auf dem Puffer 40 auftrifft. Diese Fügeparameter umfassen bevorzugt einen hydraulischen oder pneumatischen Druckbereich beim Fügen mit einem hydraulischen oder pneumatischen Kolben-Zylinder-Antrieb zur Charakterisierung der Fügeenergie. Zudem umfassen die Fügeparameter bevorzugt einen Geschwindigkeitsbereich für den elektromotorischen Antrieb des Setzgeräts 1.

Trotz der bekannten Fügeparameter treten häufig Schwankungen beim Hochgeschwindigkeitsfügen auf, die eine Prozessüberwachung erforderlich machen. Auf Grundlage dieser Fügeparameter werden beispielsweise automatische Fügeverbindungen hergestellt. Es ist ebenfalls die Herstellung einzelner Fügeverbindüngen bevorzugt. Ein bevorzugtes Prozessüberwachungsverfahren wird im Weiteren am Beispiel eines pneumatisch betätigten Setzgeräts 1 erläutert. Der Prozess des Hochgeschwindigkeitsfügens wird dabei folgendermaßen überwacht.

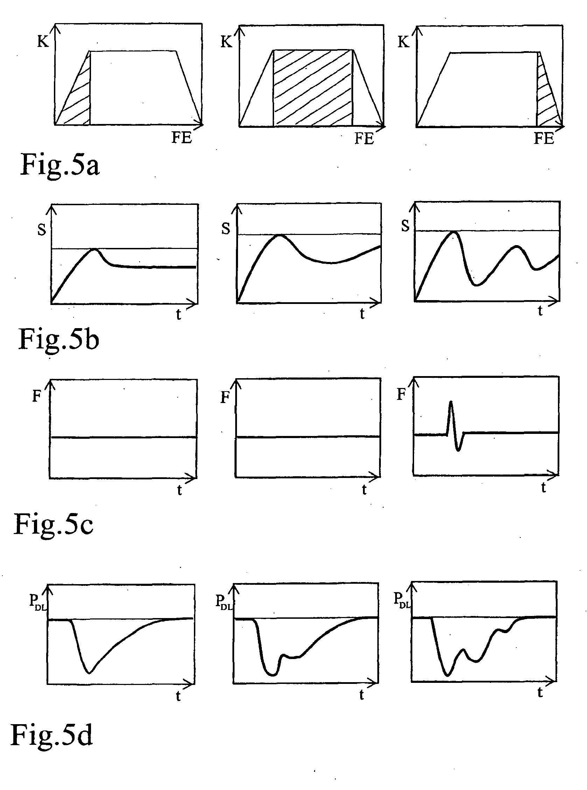

Während des Fügens des Bolzens 20 in die Bauteile 30 wird der Weg s des Stempels 10 in Abhängigkeit von der Zeit t erfasst (Schritt S7). Mittels des Wegsensors 60, der nach bekannten technischen Prinzipien arbeitet, wird der Weg s als die Steuereinheit übermittelt. Ein Weg-Zeit-Diagramm entsprechend dem aufgenommenen Stempelweg ist in den Figuren 5b schematisch dargestellt. In diesen Darstellungen ist auf der Y-Achse der Weg s aufgetragen und auf der X-Achse die Zeit t.

Gleichzeitig zum Weg s wird erfasst, ob der Stempel 10 auf dem Puffer 40 aufsetzt. Dies erfolgt mit Hilfe des Kraftsensors 52 oder mit dem bereits oben beschriebenen elektrischen Schalter 50. Der Kraftsensor 52 liefert die Kraft F, mit der der Stempel 10 auf dem Puffer 40 aufsetzt. Entsprechend ist in Figur 5c schematisch dargestellt, ob eine Kraft F in Abhängigkeit von der Zeit am Puffer 40 gemessen worden ist. Zu diesem Zweck ist auf der Y-Achse die Kraft F aufgetragen, während auf der X-Achse die Zeit t aufgetragen ist.

Die linken Darstellungen der Figuren 5a, b, c, d repräsentieren ein Fügen mit zu geringer Fügeenergie FE, so dass eine n.i.O.-Verbindung entsteht. Die mittlere Darstellung der Figuren 5a, b, c, d repräsentieren ein Fügen mit optimaler Fügeenergie FE, so dass eine i.O.-Verbindung entsteht. Die rechten Darstellungen der Figuren 5a, b, c, d repräsentieren ein Fügen mit zu hoher Fügeenergie FE, so dass eine n.i.O.-Verbindung entsteht. Zu den Verbindungen der rechten Darstellungen zählt beispielsweise auch ein durch denBolzen 20 stärker verformtes oder eingezogenes Bauteil 30 im Vergleich zur mittleren Darstellung der Figur 4a.

Die linke Darstellung der Figur 5a veranschaulicht, dass mit zu geringer Fügeenergie FE gefügt worden ist. Der Stempel 10 fügt den Bolzen 20 in die Bauteile 30. Dabei werden die Bauteile 30 in Fügerichtung elastisch verformt und federn zurück. Der Bolzen 20 dringt nicht vollständig in die Bauteile 30 ein. Daher steht der Kopf des Bolzens 20 über die Bauteile 30 über, wie in Figur 4a, linke Darstellung veranschaulicht ist. Gleichzeitig ist anhand der linken Darstellung in Figur 5c erkennbar (Schritt S8 oder S9, S 10), dass der Stempel 10 nicht auf dem Puffer 40 trifft. Auf Grund dieses Fügevorgangs zeigt die Weg-Zeit-Kurve s(t) nur ein Maximum. Gleichzeitig liefert der elektrische Schalter oder Kraftsensor 52 kein Signal, wie in Figur 5c, linke Darstellung zu erkennen ist. Im Rahmen der Weg-Zeit-Auswertung im Schritt S 11 wird die erste und zweite Ableitung der Weg-Zeit-Kurve nach der Zeit gebildet. Ist die erste Ableitung gleich Null, befindet sich an diesen Stellen jeweils ein Extrempunkt. Ist die zweite Ableitung an einem Extrempunkt größer Null, befindet sich dort in der Weg-Zeit-Kurve ein relatives Minimum. Ist die zweite Ableitung an einem Extrempunkt kleiner Null, befindet sich dort in der Weg-Zeit-Kurve ein relatives Maximum. Diese rechnerische Auswertung erfolgt bevorzugt in der Steuereinheit. Es ist ebenfalls bevorzugt, die Minima und Maxima mit Hilfe einer grafischen Auswertung der Weg-Zeit-Kurve zu bestimmen.

Bei den Messdaten gemäß Fig. 5a wird die Verbindung auf Grund der Auswertung des Weg-Signals im Schritt S11 als n.i.O. qualifiziert (Ergebnis E2). Ergänzend zu diesen Informationen liefert die linke Darstellung in Figur 5d den pneumatischen Druck im Kolben-Zylinder-Antrieb in Abhängigkeit von der Zeit. Man kann erkennen, dass sich der Druck verringert, während der Stempel 10 in Richtung Bauteil 30 beschleunigt wird. Danach wird der Druck langsam im Kolben-Zylinder-Antrieb entsprechend der nachgelieferten Druckluft wieder aufgebaut, was an dem stetig ansteigenden Druck in Abhängigkeit von der Zeit erkennbar ist.

Wird der Bolzen 20 mit höherer Fügeenergie FE gemäß den mittleren Darstellungen in den Figuren 4c oder 5a gefügt, ergibt sich eine i.O.-Verbindung. Der Stempelweg der mittleren Darstellung in Figur 5b zeigt, dass der Stempel 10 den Bolzen 20 mit ausreichender Fügeenergie FE fügt. Diese Fügeenergie FE ist ausreichend, um den Bolzen 20 einzutreiben und die Bauteile 30 elastisch zu verformen. Dies entspricht dem ersten Maximum in der Weg-Zeit-Kurve s(t) in der mittleren Darstellung von Figur 5b. Aufgrund der Verformung der Bauteile 30 gibt es eine Bauteilreaktion der Bauteile 30 auf den Stempel 10. Diese Bauteilreaktion bewegt den Stempel 10 entgegen der Fügerichtung zurück. Auf Grund dieser Bewegung wird das erste Minimum in der Weg-Zeit-Kurve s(t) erzeugt. Dabei wird Luft im pneumatischen Kolben-Zylinder-Antrieb durch die Stempelbewegung entgegen der Fügerichtung komprimiert. Nachfolgend entspannt sich diese komprimierte Luft des Kolben-Zylinder-Antriebs und bewegt den Stempel 10 wieder in Fügerichtung. Trotz dieser Bewegung des Stempels 10 erfolgt kein Auftreffen des Stempels 10 auf dem Puffer 40. Die bereits oben beschriebene Auswertung mit Hilfe der ersten und zweiten Ableitung der Weg-Zeit-Kurve nach der Zeit oder einer grafischen Auswertung liefert ein Maximum gefolgt von einem Minimum (Schritt S11). Somit wird die hergestellte Verbindung als i.O. qualifiziert (Ergebnis E1). Sollte der Stempel 10 auf den Puffer 40 mit einer Aufsetzkraft unterhalb einer Mindest-Aufsetzkraft auftreffen, ist es ebenfalls bevorzugt, diese Verbindung als i.O. zu qualifizieren (Schritt S9, S 10).

Die mittlere Darstellung der Figur 5d zeigt, wie der Druck im pneumatischen Kolben-Zylinder-Antrieb beim Fügen verringert wird. Wenn der Stempel 10 durch die Bauteilreaktion entgegen der Fügerichtung bewegt wird, steigt der Druck im Kolben-Zylinder-Antrieb bis zu einem Zwischenmaximum an.

Wird der Bolzen 20 mit zu hoher Fügeenergie FE gefügt, entsteht eine n.i.O.-Verbindung. In der rechten Darstellung der Figuren 5a bis d ist dieser Vorgang dargestellt. Die Weg-Zeit-Kurve des Stempels gemäß Figur 5b, rechte Darstellung zeigt, dass der Stempel 10 zunächst den Bolzen 20 fügt. Dies ist anhand des ersten Maximums in der Weg-Zeit-Kurve der Figur 5b sowie des ersten Minimums in der Druckkurve der Figur 5d, rechte Darstellung erkennbar. Gleichzeitig trifft der Stempel auf Grund der zu hohen Fügeenergie FE auf den Puffer 40. Dies signalisiert entweder ein Kraftsignal oder ein elektrisches Signal, wie es in Figur 5c rechte Darstellung veranschaulicht ist (Schritte S8 oder S9, S 10). Nach dem Eintragen des Bolzens 20 bewegt die Bauteilreaktion den Stempel 10 entgegen der Fügerichtung zurück. Dabei wird die Luft im pneumatischen Kolben-Zylinder-Antrieb komprimiert. Basierend auf dieser komprimierenden Bauteilreaktion entsteht das erste Minimum in der Weg-Zeit-Kurve der Figur 5b, rechte Darstellung. Zudem wird das erste Maximum in der Druck-Zeit-Kurve des Kolben-Zylinder-Antriebs der Figur 5d rechte Darstellung erzeugt.

Die Kompression der Luft im Kolben-Zylinder-Antrieb ist so stark, dass der Stempel 10 bei der Entspannung der Kompression erneut in Richtung Bauteil beschleunigt wird. Auf Grund dieser Beschleunigung trifft der Stempel 10 erneut auf den Bolzen 20 im Bauteil 30 auf. Dies erzeugt das zweite Maximum in der Weg-Zeit-Kurve s(t) der Figur 5b, rechte Darstellung. Zudem wird durch diesen Vorgang das zweite Minimum in der Druck-Zeit-Kurve der Figur 5d, rechte Darstellung erzeugt.

Nachfolgend werden im Schritt S 11 die Minima und Maxima in der Weg-Zeit-Kurve bestimmt (siehe oben). Dies liefert mindestens ein Maximum gefolgt von einem Minimum. Neben dem Maximum in der Weg-Zeit-Kurve ist bereits das Signal des elektrischen Schalters oder des Kraftsensors 52 ausreichend, um das Auftreffen des Stempels 10 auf dem Puffer 40 zu signalisieren (Schritt S8 oder Schritte S9, S 10). Auf Grund dieser Information an die Steuereinheit des Setzgeräts 1 wird ein Fügen mit zu hoher Fügeenergie FE erkannt. Die Verbindung wird daher als n.i.O. qualifiziert (Ergebnis E2).

Im Hinblick auf die Auswertung der Weg-Zeit-Kurve im Schritt S 11 kann daher folgendes zusammengefasst werden: Liefert die Auswertung im Schritt S 11, dass an den gefundenen Extrempunkten mindestens ein Maximum und mindestens ein Minimum in der Weg-Zeit-Kurve vorliegt, ist die Verbindung dann in Ordnung (i.O.), wenn der Stempel 10 beim Fügen nicht auf den Puffer 40 auftraf. Liefert jedoch der Puffer 40 in Kombination mit dem elektrischen Schalter oder dem Kraftsensor 52 gleichzeitig zu einem Maximum und Minimum in der Weg-Zeit-Kurve ein ausreichendes Signal, wird die Verbindung als n.i.O. qualifiziert.

## Patentansprüche

1. Prozessüberwachungsverfahren eines Fügevorgangs eines Fügeelements (20) mit einer Geschwindigkeit von mindestens 5 m/s, insbesondere ein Setzen eines Bolzens (20) mit mindestens 10 m/s, in mindestens ein Bauteil (30) mit Hilfe eines Setzgeräts (1), das die folgenden Merkmale aufweist: einen Stempel (10) zum Setzen des Fügeelements (20), einen Puffer (40), der eine maximale Auslenkung des Stempels (10) in Fügerichtung begrenzt, und eine Wegmessung (60), mit der die Auslenkung des Stempels (10) erfassbar ist, wobei die Prozessüberwachung die folgenden Schritte umfasst:
a. Erfassen des Wegs des Stempels (10) während des Fügevorgangs in Abhängigkeit von der Zeit in Form einer Weg-Zeit-Kurve (S7),
b. Erfassen eines Aufsetzen des Stempels (10) auf dem Puffer (40) (S7),
c. Auswerten der Weg-Zeit-Kurve (S11) derart, dass bei Vorhandensein mindestens eines Maximums gefolgt von mindestens einem Minimum in der Weg-Zeit-Kurve und ohne Aufsetzen des Stempels (10) auf dem Puffer (40) eine gefügte Verbindung als i.O. qualifiziert wird.

2. Prozessüberwachung gemäß Anspruch 1, während der Puffer (40) des Setzgeräts (1) einen durch den Stempel (10) auslösbaren elektrischen Schalter (50) umfasst und die Prozessüberwachung den weiteren Schritt aufweist:
Auslösen eines elektrischen Signals durch den Puffer (40), wenn der Stempel (10) auf den Puffer (40) auftrifft.

3. Prozessüberwachung gemäß Anspruch 1, während der Puffer (40) des Setzgeräts (1) einen Kraftsensor umfasst, der die Aufsetzkraft des Stempels (10) beim Aufsetzen auf dem Puffer (40) erfasst und die Prozessüberwachung den weiteren Schritt aufweist:
Ausgeben einer Aufsetzkraft durch den Puffer (40), wenn der Stempel (10) auf dem Puffer (40) aufsetzt (S9).

4. Prozessüberwachung gemäß Anspruch 3, wobei ein Aufsetzen des Stempels (10) auf dem Puffer (40) unterhalb einer Mindest-Aufsetzkraft nicht als Aufsetzen des Stempels (10) auf dem Puffer (40) erfasst wird (S9, S10).

5. Prozessüberwachung gemäß Anspruch 1, mit dem weiteren Schritt:
Bilden der ersten und zweiten Ableitung der Weg-Zeit-Kurve nach der Zeit zur Bestimmung des mindestens einen Maximums und des mindestens einen Minimums (S11).

6. Prozessüberwachung gemäß Anspruch 1, mit dem weiteren Schritt:
empirisches Ermitteln einer dem Fügeelement (20) zuzuführenden Fügeenergie und eines durch das Fügeelement (20) zurückzulegenden Wegs, um eine i.O.-Verbindung zu erzielen, ohne dass der Stempel (10) auf dem Puffer (40) auftrifft.

7. Prozessüberwachung gemäß Anspruch 6, mit dem weiteren Schritt:
Ermitteln (S3) eines Druckbereichs beim pneumatischen oder hydraulischen Fügen eines Fügeelements (20) als Referenz der dem Fügeelement (20) zuzuführenden Fügeenergie.

8. Prozessüberwachung gemäß Anspruch 6, mit dem weiteren Schritt:
Ermitteln (S2) eines Geschwindigkeitsbereichs des Stempels (10) beim elektromechanischen Fügen eines Fügeelements (20) als Referenz der dem Fügeelement (20) zuzuführenden Fügeenergie.

9. Prozessüberwachung gemäß Anspruch 6, mit dem weiteren Schritt:
Bestimmen einer Qualität einer hergestellten Fügeverbindung anhand der Kopfzugfestigkeit des Fügeelements (20) beim Entfernen aus dem mindestens einen Bauteil (30) (S5).

10. Prozessüberwachung gemäß Anspruch 1, mit dem weiteren Schritt:
Durchführen einer optischen Prüfung (S4), ob eine hergestellte Verbindung i.O. ist, vorzugsweise beim empirischen Ermitteln der Fügeenergie gemäß Anspruch 6.

11. Prozessüberwachung gemäß Anspruch 1 oder 9, mit dem weiteren Schritt:
Durchführen einer Drehmomentprüfung (S6), ob eine hergestellte Verbindung i.O. ist vorzugsweise beim empirischen Ermitteln der Fügeenergie gemäß Anspruch 6.

12. Prozessüberwachung gemäß Anspruch 11, mit dem weiteren Schritt:
Drehen des gefügten Fügeelements (20) mit einem definierten Drehmoment (S6), so dass bei fehlendem Mitdrehen des Fügeelements(20) die Verbindung als i.O. qualifiziert wird.

## Claims

1. A process monitoring method of a joining operation of a joining element (20) at a speed of at least 5 m/s, in particular placing a bolt (20) at at least 10 m/s into at least one component (30) with the aid of a setting device (1) which has the following features: a plunger (10) for setting the joining element (20), a buffer (40) which limits a maximum deflection of the plunger (10) in the joining direction, and a distance measurement (60) with which the deflection of the plunger (10) can be detected, wherein the monitoring of the process comprises the following steps:
a. Detecting the path of the plunger (10) during the joining operation as a function of the time in the form of a distance-time curve (S7),
b. Detecting a contact of the plunger (10) on the buffer (40) (S7),
c. Evaluating the distance-time curve (S11) such that, in the presence of at least one maximum followed by at least one minimum in the distance-time curve and without the plunger (10) contacting the buffer (40), a joint connection is judged to be OK.

2. The process monitoring according to claim 1, while the buffer (40) of the setting device (1) comprises an electrical switch (50) that can be triggered by the plunger (10), and the process monitoring comprises the additional step:
Triggering of an electrical signal by the buffer (40) when the plunger (10) contacts the buffer (40).

3. The process monitoring according to claim 1, while the buffer (40) of the setting device (1) comprises a force sensor that detects the setting force of the plunger (10) when contacting the buffer (40), and the process monitoring comprises the additional step:
Outputting of a setting force by the buffer (40) when the plunger (10) contacts the buffer (40) (S9).

4. The process monitoring according to claim 3, wherein a contacting of the plunger (10) on the buffer (40) below a minimum setting force is not detected as contacting of the plunger (10) on the buffer (40) (S9, S10).

5. The process monitoring according to claim 1, with the further step:
Forming the first and second derivative of the distance-time curve over time to determine the at least one maximum and the at least one minimum (S11).

6. The process monitoring according to claim 1, with the further step:
Empirically determining the joining energy to be supplied to the joining element (20) along with a distance to be traveled by the joining element (20) to achieve a connection that is OK without the plunger (10) contacting the buffer (40).

7. The process monitoring according to claim 6, with the further step:
Determining (S3) a pressure range when pneumatically or hydraulically joining a joining element (20) as a reference for the joining energy to be supplied to the joining element (20).

8. The process monitoring according to claim 6, with the further step:
Determining (S2) a speed range of the plunger (10) when electromechanically joining a joining element (20) as a reference for the joining energy to be supplied to the joining element (20).

9. The process monitoring according to claim 6, with the further step:
Determining a quality of a created joint by means of the tensile strength of the head of the joining element (20) during removal from the at least one component (30) (S5).

10. The process monitoring according to claim 1, with the further step:
Performing a visual inspection (S4) of whether a created connection is OK, preferably while empirically determining the joining energy according to claim 6.

11. The process monitoring according to claims 1 or 9, with the further step:
Performing a torque test (S6) of whether a created connection is OK, preferably while empirically determining the joining energy according to claim 6.

12. The process monitoring according to claim 11, with the further step:
Rotating the joined joining element (20) at a defined torque (S6) so that the connection can be judged as OK if the joining element (20) fails to rotate.

## Revendications

1. Procédé de contrôle d'un processus d'assemblage d'un élément d'assemblage (20) à une vitesse d'au moins 5 m/s, en particulier un scellement d'une cheville (20) à au moins 10 m/s, dans au moins un composant (30) à l'aide d'un outil de scellement (1) qui présente les caractéristiques suivantes : un poinçon (10) pour sceller l'élément d'assemblage (20), un tampon (40) qui délimite une déviation maximale du poinçon (10) dans le sens d'assemblage, et une mesure de course (60) qui permet de détecter la déviation du poinçon (10), le contrôle de processus comprenant les étapes suivantes:
a. détection de la course du poinçon (10) pendant le processus d'assemblage en fonction du temps sous la forme d'une courbe course/temps (S7),
b. détection d'une application du poinçon (10) sur le tampon (40) (S7),
c. interprétation de la courbe course/temps (S11) de telle sorte qu'en cas de présence d'au moins une valeur maximale suivie d'au moins une valeur minimale sur la courbe course/temps et sans application du poinçon (10) sur le tampon (40), une jonction aboutée est considérée en ordre.

2. Contrôle d'un processus d'assemblage selon la revendication 1, au cours duquel le tampon (40) de l'outil de scellement (1) comprend un commutateur électrique (50) déclenchable par le poinçon (10) et le contrôle de processus comprend l'autre étape:
déclenchement d'un signal électrique par le tampon (40) lorsque le poinçon (10) fait impact sur le tampon (40).

3. Contrôle d'un processus d'assemblage selon la revendication 1, au cours duquel le tampon (40) de l'outil de scellement (1) comprend un capteur de force qui détecte la force d'application du poinçon (10) lors de l'application sur le tampon (40) et le contrôle de processus comprend l'autre étape suivante:
émission d'une force d'application par le tampon (40), lorsque le poinçon (10) s'applique sur le tampon (40) (S9).

4. Contrôle d'un processus d'assemblage selon la revendication 3, dans lequel une application du poinçon (10) sur le tampon (40) en dessous d'une force d'application minimale n'est pas détectée comme l'application du poinçon (10) sur le tampon (40) (S9, S10).

5. Contrôle d'un processus d'assemblage selon la revendication 1, comprenant l'autre étape suivante:
formation de la première et de la seconde dérivation de la courbe course/temps selon le temps de détermination d'au moins une valeur maximale et d'au moins une valeur minimale (S11).

6. Contrôle d'un processus d'assemblage selon la revendication 1, comprenant l'autre étape suivante:
détermination empirique d'une énergie d'assemblage devant être amenée à l'élément d'assemblage (20) et d'une course devant être parcourue par l'élément d'assemblage (20) pour obtenir une jonction en ordre, sans que le poinçon (10) fasse impact sur le tampon (40).

7. Contrôle d'un processus d'assemblage selon la revendication 6, comprenant l'autre étape suivante:
détermination (S3) d'une plage de pression lors de l'assemblage pneumatique ou hydraulique d'un élément d'assemblage (20) en guise de référence à l'énergie d'assemblage devant être amenée à l'élément d'assemblage (20).

8. Contrôle d'un processus d'assemblage selon la revendication 6, comprenant l'autre étape suivante:
détermination (S2) d'une plage de vitesse du poinçon (10) lors de l'assemblage électromécanique d'un élément d'assemblage (20) en guise de référence à l'énergie d'assemblage devant être amenée à l'élément d'assemblage (20).

9. Contrôle d'un processus d'assemblage selon la revendication 6, comprenant l'autre étape suivante:
définition d'une qualité d'une jonction d'assemblage créée au moyen de la résistance à la fatigue de l'élément d'assemblage (20) lors du retrait depuis au moins un composant (30) (S5).

10. Contrôle d'un processus d'assemblage selon la revendication 1, comprenant l'autre étape suivant
exécution d'un contrôle optique (S4) pour déterminer si une jonction créée est en ordre, de préférence lors de la détermination empirique de l'énergie d'assemblage selon la revendication 6.

11. Contrôle d'un processus d'assemblage selon les revendications 1 ou 9, comprenant l'autre étape suivante :
exécution d'un contrôle de couple (S6) pour déterminer si une jonction créée est en ordre, de préférence lors de la détermination empirique de l'énergie d'assemblage selon la revendication 6.

12. Contrôle d'un processus d'assemblage selon la revendication 11, comprenant l'autre étape suivante:
rotation de l'élément d'assemblage abouté (20) avec un couple défini (S6), de telle sorte qu'en cas d'absence de co-rotation de l'élément d'assemblage (20), la jonction est considérée en ordre.
